# EUROPEAN PATENT APPLICATION

(11) **EP 4 567 548 A1**
(43) Date of publication of application: **11.06.2025**
(21) Application number: 24214656.1
(22) Date of filing: 21.11.2024
(51) Int. Cl.: G06F 1/10, G06F 1/324, H03K 23/66

(54) **POWER OPTIMIZATION IN ELECTRONIC CIRCUITS BASED ON ROOT CLOCK THROTTLING**

(30) Priority: 07.12.2023 US 202318533074
(71) Applicant: Nokia Solutions and Networks Oy, 02610 Espoo (FI)
(72) Inventor: ALLEYNE, Brian, Los Gatos, 95030 (US); HSU, Hengwei, Fremont, 94539 (US); ANSARI, Najeeb, San Jose, 95120 (US)
(74) Representative: Novagraaf Technologies

(57) **Abstract**

Various example embodiments for supporting power optimizations for electronic circuits are presented. Various example embodiments for supporting power optimizations for electronic circuits may be configured to support power optimizations for a block of an electronic circuit. Various example embodiments for supporting power optimizations for a block of an electronic circuit may be configured to support a reduction in power consumption by a clock distribution tree of the block of the electronic circuit. Various example embodiments for supporting a reduction in power consumption by a clock distribution tree of a block of an electronic circuit may be configured to reduce power consumption by the clock distribution tree of the block of the electronic circuit by supporting root clock throttling for the block of the electronic circuit, based on a workload on the block of the electronic circuit, to reduce power consumption by the clock distribution tree of the block of the electronic circuit.

## Description

### TECHNICAL FIELD

Various example embodiments relate generally to electronic circuits and, more particularly but not exclusively, to supporting power optimizations in electronic circuits.

### BACKGROUND

An important design aspect for electronic circuits is power dissipation. In application specific integrated circuits (ASICs), power is generally dissipated by block logic. Low-power ASIC design is becoming increasingly prevalent, especially for companies that design devices that run on battery (e.g., laptops, smartphones, and so forth). Accordingly, there is a need to continue to support power optimizations in ASICs, and in electronic circuits in general.

### SUMMARY

In at least some example embodiments, an apparatus includes a block, wherein the block includes a clock distribution tree configured to distribute a clock signal within the block, wherein the block is configured to control, based on information indicative of a workload on the block, which clock pulses of the clock signal are permitted to pass from a first portion of the clock distribution tree of the block to a second portion of the clock distribution tree of the block. In at least some example embodiments, a fraction of the clock pulses of the of the clock signal that are permitted to pass from the first portion of the clock distribution tree of the block to the second portion of the clock distribution tree of the block is controlled to remain within a range between a non-zero minimum and a maximum that is based on the clock signal of the block. In at least some example embodiments, clock pulses of the clock signal of the block are permitted to pass from the first portion of the clock distribution tree of the block to the second portion of the clock distribution tree of the block when the information indicative of the workload on the block is indicative that activity is presented at an input interface to the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is presented at an input interface to the block. In at least some example embodiments, clock pulses of the clock signal of the block are permitted to pass from the first portion of the clock distribution tree of the block to the second portion of the clock distribution tree of the block when the information indicative of the workload on the block is indicative that activity is available at an output interface from the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is available at an output interface from the block. In at least some example embodiments, clock pulses of the clock signal of the block are permitted to pass from the first portion of the clock distribution tree of the block to the second portion of the clock distribution tree of the block when the information indicative of the workload on the block is indicative that a measure of internal states of the block is indicative that work is presented to the block. In at least some example embodiments, the measure of internal states is based on at least one of a measure of an occupancy of a work queue of the block or a measure of a number of active threads of the block. In at least some example embodiments, an amount of the clock pulses of the clock signal of the block that are permitted to pass from the first portion of the clock distribution tree of the block to the second portion of the clock distribution tree of the block is based on the measure of the internal states of the block. In at least some example embodiments, the amount of the clock pulses of the clock signal of the block that are permitted to pass from the first portion of the clock distribution tree of the block to the second portion of the clock distribution tree of the block is determined based on a mapping table that maps a set of workload thresholds to a set of fractions of clock pulses to be permitted to pass from the first portion of the clock distribution tree of the block to the second portion of the clock distribution tree of the block. In at least some example embodiments, the clock pulses of the clock signal of the block that are permitted to pass from the first portion of the clock distribution tree of the block to the second portion of the clock distribution tree of the block are synchronous to the clock signal of the block at a leaf level of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator configured to control, based on the clock control signal, passage of clock pulses of the clock signal of the block from the first portion of the clock distribution tree of the block to the second portion of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator including a clock input configured to receive the clock signal of the block, a control input configured to receive a latched version of the clock control signal, and a clock output configured to output the clock pulses of the clock signal of the block that are permitted to pass from the first portion of the clock distribution tree of the block to the second portion of the clock distribution tree of the block. In at least some example embodiments, the block includes an interface configured to support communications between the first portion of the clock distribution tree of the block and the second portion of the clock distribution tree of the block. In at least some example embodiments, the interface includes a pseudo-synchronous first-in-first-out queue. In at least some example embodiments, the interface includes at least one of a pulse crosser or a pulse-transition-pulse module. In at least some example embodiments, the block includes a processor and a memory. In at least some example embodiments, the apparatus is a device including an electronic circuit on which the block is disposed. In at least some example embodiments, the apparatus is an electronic circuit on which the block is disposed. In at least some example embodiments, the apparatus is an integrated circuit on which the block is disposed. In at least some example embodiments, the apparatus is an application specific integrated circuit on which the block is disposed.

In at least some example embodiments, a non-transitory computer-readable medium stores computer program instructions which, when executed by an apparatus, cause the apparatus at least to obtain, by a block including a clock distribution tree configured to distribute a clock signal within the block, information indicative of a workload on the block, and control, based on the information indicative of the workload on the block, which clock pulses of the clock signal are permitted to pass from a first portion of the clock distribution tree of the block to a second portion of the clock distribution tree of the block. In at least some example embodiments, a fraction of the clock pulses of the of the clock signal that are permitted to pass from the first portion of the clock distribution tree of the block to the second portion of the clock distribution tree of the block is controlled to remain within a range between a non-zero minimum and a maximum that is based on the clock signal of the block. In at least some example embodiments, clock pulses of the clock signal of the block are permitted to pass from the first portion of the clock distribution tree of the block to the second portion of the clock distribution tree of the block when the information indicative of the workload on the block is indicative that activity is presented at an input interface to the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is presented at an input interface to the block. In at least some example embodiments, clock pulses of the clock signal of the block are permitted to pass from the first portion of the clock distribution tree of the block to the second portion of the clock distribution tree of the block when the information indicative of the workload on the block is indicative that activity is available at an output interface from the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is available at an output interface from the block. In at least some example embodiments, clock pulses of the clock signal of the block are permitted to pass from the first portion of the clock distribution tree of the block to the second portion of the clock distribution tree of the block when the information indicative of the workload on the block is indicative that a measure of internal states of the block is indicative that work is presented to the block. In at least some example embodiments, the measure of internal states is based on at least one of a measure of an occupancy of a work queue of the block or a measure of a number of active threads of the block. In at least some example embodiments, an amount of the clock pulses of the clock signal of the block that are permitted to pass from the first portion of the clock distribution tree of the block to the second portion of the clock distribution tree of the block is based on the measure of the internal states of the block. In at least some example embodiments, the amount of the clock pulses of the clock signal of the block that are permitted to pass from the first portion of the clock distribution tree of the block to the second portion of the clock distribution tree of the block is determined based on a mapping table that maps a set of workload thresholds to a set of fractions of clock pulses to be permitted to pass from the first portion of the clock distribution tree of the block to the second portion of the clock distribution tree of the block. In at least some example embodiments, the clock pulses of the clock signal of the block that are permitted to pass from the first portion of the clock distribution tree of the block to the second portion of the clock distribution tree of the block are synchronous to the clock signal of the block at a leaf level of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator configured to control, based on the clock control signal, passage of clock pulses of the clock signal of the block from the first portion of the clock distribution tree of the block to the second portion of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator including a clock input configured to receive the clock signal of the block, a control input configured to receive a latched version of the clock control signal, and a clock output configured to output the clock pulses of the clock signal of the block that are permitted to pass from the first portion of the clock distribution tree of the block to the second portion of the clock distribution tree of the block. In at least some example embodiments, the block includes an interface configured to support communications between the first portion of the clock distribution tree of the block and the second portion of the clock distribution tree of the block. In at least some example embodiments, the interface includes a pseudo-synchronous first-in-first-out queue. In at least some example embodiments, the interface includes at least one of a pulse crosser or a pulse-transition-pulse module. In at least some example embodiments, the block includes a processor and a memory. In at least some example embodiments, the apparatus is a device including an electronic circuit on which the block is disposed. In at least some example embodiments, the apparatus is an electronic circuit on which the block is disposed. In at least some example embodiments, the apparatus is an integrated circuit on which the block is disposed. In at least some example embodiments, the apparatus is an application specific integrated circuit on which the block is disposed.

In at least some example embodiments, a method includes obtaining, by a block including a clock distribution tree configured to distribute a clock signal within the block, information indicative of a workload on the block, and controlling, based on the information indicative of the workload on the block, which clock pulses of the clock signal are permitted to pass from a first portion of the clock distribution tree of the block to a second portion of the clock distribution tree of the block. In at least some example embodiments, a fraction of the clock pulses of the of the clock signal that are permitted to pass from the first portion of the clock distribution tree of the block to the second portion of the clock distribution tree of the block is controlled to remain within a range between a non-zero minimum and a maximum that is based on the clock signal of the block. In at least some example embodiments, clock pulses of the clock signal of the block are permitted to pass from the first portion of the clock distribution tree of the block to the second portion of the clock distribution tree of the block when the information indicative of the workload on the block is indicative that activity is presented at an input interface to the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is presented at an input interface to the block. In at least some example embodiments, clock pulses of the clock signal of the block are permitted to pass from the first portion of the clock distribution tree of the block to the second portion of the clock distribution tree of the block when the information indicative of the workload on the block is indicative that activity is available at an output interface from the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is available at an output interface from the block. In at least some example embodiments, clock pulses of the clock signal of the block are permitted to pass from the first portion of the clock distribution tree of the block to the second portion of the clock distribution tree of the block when the information indicative of the workload on the block is indicative that a measure of internal states of the block is indicative that work is presented to the block. In at least some example embodiments, the measure of internal states is based on at least one of a measure of an occupancy of a work queue of the block or a measure of a number of active threads of the block. In at least some example embodiments, an amount of the clock pulses of the clock signal of the block that are permitted to pass from the first portion of the clock distribution tree of the block to the second portion of the clock distribution tree of the block is based on the measure of the internal states of the block. In at least some example embodiments, the amount of the clock pulses of the clock signal of the block that are permitted to pass from the first portion of the clock distribution tree of the block to the second portion of the clock distribution tree of the block is determined based on a mapping table that maps a set of workload thresholds to a set of fractions of clock pulses to be permitted to pass from the first portion of the clock distribution tree of the block to the second portion of the clock distribution tree of the block. In at least some example embodiments, the clock pulses of the clock signal of the block that are permitted to pass from the first portion of the clock distribution tree of the block to the second portion of the clock distribution tree of the block are synchronous to the clock signal of the block at a leaf level of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator configured to control, based on the clock control signal, passage of clock pulses of the clock signal of the block from the first portion of the clock distribution tree of the block to the second portion of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator including a clock input configured to receive the clock signal of the block, a control input configured to receive a latched version of the clock control signal, and a clock output configured to output the clock pulses of the clock signal of the block that are permitted to pass from the first portion of the clock distribution tree of the block to the second portion of the clock distribution tree of the block. In at least some example embodiments, the block includes an interface configured to support communications between the first portion of the clock distribution tree of the block and the second portion of the clock distribution tree of the block. In at least some example embodiments, the interface includes a pseudo-synchronous first-in-first-out queue. In at least some example embodiments, the interface includes at least one of a pulse crosser or a pulse-transition-pulse module. In at least some example embodiments, the block includes a processor and a memory. In at least some example embodiments, the apparatus is a device including an electronic circuit on which the block is disposed. In at least some example embodiments, the apparatus is an electronic circuit on which the block is disposed. In at least some example embodiments, the apparatus is an integrated circuit on which the block is disposed. In at least some example embodiments, the apparatus is an application specific integrated circuit on which the block is disposed.

In at least some example embodiments, an apparatus includes means for obtaining, by a block including a clock distribution tree configured to distribute a clock signal within the block, information indicative of a workload on the block, and controlling, based on the information indicative of the workload on the block, which clock pulses of the clock signal are permitted to pass from a first portion of the clock distribution tree of the block to a second portion of the clock distribution tree of the block. In at least some example embodiments, a fraction of the clock pulses of the of the clock signal that are permitted to pass from the first portion of the clock distribution tree of the block to the second portion of the clock distribution tree of the block is controlled to remain within a range between a non-zero minimum and a maximum that is based on the clock signal of the block. In at least some example embodiments, clock pulses of the clock signal of the block are permitted to pass from the first portion of the clock distribution tree of the block to the second portion of the clock distribution tree of the block when the information indicative of the workload on the block is indicative that activity is presented at an input interface to the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is presented at an input interface to the block. In at least some example embodiments, clock pulses of the clock signal of the block are permitted to pass from the first portion of the clock distribution tree of the block to the second portion of the clock distribution tree of the block when the information indicative of the workload on the block is indicative that activity is available at an output interface from the block. In at least some example embodiments, clock pulses of the clock signal of the block are prevented from passing from the first portion of the clock distribution tree of the block to the second portion of the clock distribution tree of the block when the information indicative of the workload on the block is indicative that no activity is available at an output interface from the block. In at least some example embodiments, clock pulses of the clock signal of the block are permitted to pass from the first portion of the clock distribution tree of the block to the second portion of the clock distribution tree of the block when the information indicative of the workload on the block is indicative that a measure of internal states of the block is indicative that work is presented to the block. In at least some example embodiments, the measure of internal states is based on at least one of a measure of an occupancy of a work queue of the block or a measure of a number of active threads of the block. In at least some example embodiments, an amount of the clock pulses of the clock signal of the block that are permitted to pass from the first portion of the clock distribution tree of the block to the second portion of the clock distribution tree of the block is based on the measure of the internal states of the block. In at least some example embodiments, the amount of the clock pulses of the clock signal of the block that are permitted to pass from the first portion of the clock distribution tree of the block to the second portion of the clock distribution tree of the block is determined based on a mapping table that maps a set of workload thresholds to a set of fractions of clock pulses to be permitted to pass from the first portion of the clock distribution tree of the block to the second portion of the clock distribution tree of the block. In at least some example embodiments, the clock pulses of the clock signal of the block that are permitted to pass from the first portion of the clock distribution tree of the block to the second portion of the clock distribution tree of the block are synchronous to the clock signal of the block at a leaf level of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator configured to control, based on the clock control signal, passage of clock pulses of the clock signal of the block from the first portion of the clock distribution tree of the block to the second portion of the clock distribution tree of the block. In at least some example embodiments, the block includes a controller configured to generate, based on the information indicative of the workload on the block, a clock control signal configured to control which clock pulses of the clock signal are permitted to pass from the first portion of the clock distribution tree of the block to the second portion of the clock distribution tree of the block, and a clock modulator including a clock input configured to receive the clock signal of the block, a control input configured to receive a latched version of the clock control signal, and a clock output configured to output the clock pulses of the clock signal of the block that are permitted to pass from the first portion of the clock distribution tree of the block to the second portion of the clock distribution tree of the block. In at least some example embodiments, the block includes an interface configured to support communications between the first portion of the clock distribution tree of the block and the second portion of the clock distribution tree of the block. In at least some example embodiments, the interface includes a pseudo-synchronous first-in-first-out queue. In at least some example embodiments, the interface includes at least one of a pulse crosser or a pulse-transition-pulse module. In at least some example embodiments, the block includes a processor and a memory. In at least some example embodiments, the apparatus is a device including an electronic circuit on which the block is disposed. In at least some example embodiments, the apparatus is an electronic circuit on which the block is disposed. In at least some example embodiments, the apparatus is an integrated circuit on which the block is disposed. In at least some example embodiments, the apparatus is an application specific integrated circuit on which the block is disposed.

### BRIEF DESCRIPTION OF THE DRAWINGS

The teachings herein can be readily understood by considering the following detailed description in conjunction with the accompanying drawings, in which:
FIG. 1 depicts an example embodiment of an application specific integrated circuit including a set of blocks including a block configured to support root clock throttling as a function of a workload of the block;
FIG. 2 depicts an example embodiment of root clock throttling for a block as a function of a workload of the block;
FIG. 3 depicts an example embodiment of a root clock throttling technique, based on gating of the root clock to form a throttled clock, in a manner that preserves synchronization of the timing of the root clock with the timing of the throttled clock;
FIG. 4 depicts an example embodiment of a root clock throttling technique, based on gating of the root clock to form a throttled clock, in a manner that enables more useful work to be performed by the block based on the throttled clock;
FIG. 5 depicts an example embodiment of a method for use by a block of an application specific integrated circuit to support root clock throttling;
FIG. 6 depicts an example embodiment of a method for use by a controller of a block of an electronic circuit to support root clock throttling; and
FIG. 7 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting power optimizations for electronic circuits are presented herein.

Various example embodiments for supporting power optimizations for electronic circuits may be configured to support power optimizations for electronic circuits based on support for power optimization for a block of an electronic circuit. Various example embodiments for supporting power optimizations for electronic circuits may be configured to support power optimizations for a block of an electronic circuit by supporting a reduction in power consumption by a clock distribution tree of the block of the electronic circuits. Various example embodiments for supporting power optimizations for electronic circuits may be configured to support power optimizations for a block of an electronic circuit by supporting root clock throttling for the block of the electronic circuit in order to reduce power consumption by the clock distribution tree of the block of the electronic circuit. Various example embodiments for supporting power optimizations for electronic circuits may be configured to support power optimizations for a block of an electronic circuit by supporting root clock throttling for the block of the electronic circuit in order to reduce power consumption by the clock distribution tree of the block of the electronic circuit while still supporting the standard timing within the electronic circuit. Various example embodiments for supporting power optimizations for electronic circuits may be configured to support power optimizations for a block of an electronic circuit for various types of electronic circuits (e.g., integrated circuits (ICs), application specific integrated circuits (ASICs), or the like). It will be appreciated that these as well as various other example embodiments of root clock throttling for blocks of electronic circuits may be further understood by further considering use of such power optimizations in ASICs, as discussed further below.

Various example embodiments for supporting power optimizations for electronic circuits may be configured to support power optimizations for application specific integrated circuits (ASICs). Various example embodiments for supporting power optimizations for ASICs may be configured to support power optimizations for blocks of ASICs. Various example embodiments for supporting power optimizations for ASICs may be configured to support power optimizations for a block of an ASIC by supporting a reduction in power consumption by a clock distribution tree of the block of the ASIC. Various example embodiments for supporting power optimizations for ASICs may be configured to support power optimizations for a block of an ASIC by supporting root clock throttling for the block of the ASIC in order to reduce power consumption by the clock distribution tree of the block of the ASIC. Various example embodiments for supporting power optimizations for ASICs may be configured to support power optimizations for a block of an ASIC by supporting root clock throttling for the block of the ASIC in order to reduce power consumption by the clock distribution tree of the block of the ASIC while still supporting the standard ASIC timing within the ASIC (e.g., such that the standard ASIC flow may be employed to assess and validate timing). It will be appreciated that these as well as various other example embodiments of root clock throttling for blocks of ASICs may be further understood by first considering various more general aspects of power optimizations in ASICs, as discussed further below.

An ASIC is an integrated circuit chip that is custom-designed for a particular purpose. For example, ASICs may be designed and used for a variety of applications and devices, such as for smartphones, networking devices (e.g., routers, satellite communication devices, and so forth), digital watches, artificial intelligence (AI) programs, and so forth. In ASIC design, power is dissipated by block logic. There are generally four main components of this power: leakage, clock tree, flop load, and random logic. The ratio of these sources of power dissipation often varies by technology and function. In the past, the fraction of power lost due to leakage was relatively high compared to the other components of power. However, the recent trend has been such that the fraction of power due lost due to leakage has decreased while the fraction of power consumed by the clock tree has increased and is expected to increase further in the future. For example, at 7 nanometers (nm) for certain technologies and functions, the clock tree may be over 30% of the dynamic power and, as indicated above, this percentage may be even higher in the future. Current clock gating techniques focus on leaf clock gating (which is clock loading of the leaf flops) or turning off the function entirely by completely gating off the clock to the leaf flops; however, in both cases, the clock tree is still running and, thus, the clock tree still consumes power.

Low-power ASIC design, which is a collection of techniques directed at reducing the overall power consumption for ASICs, remains an important part of the ASIC design process. Companies that design ASICs for devices that run on battery power (e.g., smartphones, laptops, and so forth) have invested a lot into various aspects of low-power ASIC design because it impacts the battery life of such devices, which is directly customer impacting and impacts customer buying decisions. Most of the effort in such low-power ASIC design focuses on being able to shut down modules or components when not in use, and having hardware and other support to allow for applications to be designed to capitalize on this ability to shut down modules or components when not in use. Sometimes there is a capability to completely power off the module or component, while other times the clock may be shut down on the module or component level to halt activity and save power. The module or component may then be woken up or powered up periodically or when needed. While power savings may be achieved in the way, there are various applications that do not lend themselves to such capabilities for shutting down modules or components as there is always at least some amount of work to be done (e.g., networking does not lend itself to shutting down a modulate or component as there is typically at least some low-level background traffic, such as keep alive messages, that need to be processed without excessive delay).

As indicated above, various example embodiments for supporting power optimizations for ASICs may be configured to support power optimizations for a block of an ASIC based on root clock throttling for the block of the ASIC. The root clock throttling for a block of an ASIC may be performed by dynamically throttling the clock rate of the clock within at least a portion of the clock distribution tree in order to reduce power consumption by the clock distribution tree of the block of the ASIC (e.g., root clock throttling of the root clock may be applied any suitable hierarchical level of the clock distribution tree above the leaf level of the clock distribution tree that includes the clock sinks of the block of the ASIC). The root clock throttling for a block of an ASIC may be performed by dynamically controlling propagation of a root clock of the block within the clock distribution tree of the block of the ASIC (e.g., controlling which clock pulses of the root clock of the block are permitted to propagate within at least a portion of the clock distribution tree of the block, which may be applied at various layers of the clock distribution tree of the block). The root clock throttling for a block of an ASIC may be performed by dynamically controlling passage of a root clock of the block into at least a portion of the clock distribution tree of the block of the ASIC (e.g., controlling which clock pulses of the root clock of the block are permitted to pass into at least a portion of the clock distribution tree of the block, which may be applied at various layer of the clock distribution tree of the block). It will be appreciated that these example embodiments as well as various other example embodiments are discussed further below.

Various example embodiments may be configured to support root clock throttling for the root clock of a block of an ASIC by throttling the root clock of the block as a function of a workload on the block. The root clock throttling for a block of an ASIC may be performed by throttling the root clock of the block based on information indicative of the workload on the block of the ASIC (e.g., based on one or more of information indicative of input activities of the block, information indicative of output activities of the block, information indicative of pending work within the block, or the like, as well as various combinations thereof). The root clock throttling for a block of an ASIC may be performed by determining a measure of a workload on the block (e.g., based on information indicative of the workload on the block, such as one or more of information indicative of input activities of the block, information indicative of output activities of the block, information indicative of pending work within the block, or the like) and throttling the root clock of the block based on the measure of the workload on the block (e.g., increasing the clock rate of the throttled clock based on a determination that the measure of the workload increases or satisfies a threshold, decreasing the clock rate of the throttled clock based on a determination that the measure of the workload decreases or satisfies a threshold, or the like, as well as various combinations thereof). The root clock throttling for the root clock of a block of an ASIC as a function of a workload on the block may performed in various ways depending on the information indicative of the workload on the block, interpretation of the information indicative of the workload on the block, or the like, as well as various combinations thereof.

Various example embodiments may be configured to support root clock throttling for the root clock of a block of an ASIC by controlling passage of clock pulses of the root clock of the block between portions of the clock distribution tree of the block. The root clock throttling for a block of an ASIC may be performed by modulating the fraction of clock pulses from the root clock permitted to pass between portions of the clock distribution tree of the block as a function of a workload on the block of the ASIC, such as by increasing the clock rate of the throttled clock (e.g., allowing more pulses of the root clock into the clock distribution tree) as the workload on the block increases and decreasing the clock rate of the throttled clock (e.g., allowing less pulses of the root clock into the clock distribution tree) as the workload on the block decreases. The root clock throttling for a block of an ASIC may be performed by throttling the root clock to provide a throttled clock that operates between a non-zero minimum clock rate and an un-throttled maximum clock rate (which is equivalent to the root clock as the root clock is permitted to run un-throttled as a free-running root clock). The root clock throttling for a block of an ASIC may be performed by controlling a fraction of the clock pulses from the root clock permitted to pass between portions of the clock distribution tree of the block as the throttled clock (where the fraction may be any suitable fraction between (a) a non-zero minimum fraction and (b) a fraction equal to "1" in which the root clock is allowed to pass freely from a first portion of the clock distribution tree in which the clock distribution tree supports propagation of the root clock and a second portion of the clock distribution tree in which root clock throttling may be supported).

Various example embodiments may be configured to support root clock throttling for the root clock of a block of an ASIC in a manner that ensures that a clock is always running within the block of the ASIC and the block of the ASIC does not need to be powered off. The root clock throttling may be provided in a manner enabling significant power reductions for the ASIC block without powering off the ASIC block. The root clock throttling may be provided in a manner enabling reductions in power consumption when workload on the ASIC block is relatively low while ensuring that the clock is always running at least at some minimum level for the ASIC block (e.g., for handling background traffic in a networking context). The root clock throttling may be provided while also supporting communications between ASIC blocks that are throttled at different clock rates. It is noted that dynamically modulating the clock rate within the ASIC block based on the workload on the block has the effect of keeping the ASIC block pipeline full in order to allow more useful work to be done per clock cycle while also preserving synchronization of the timing of the root clock with the timing of the throttled clock (and, thus, avoids introducing asynchronous timing domains and allows use of standard ASIC timing flow). The root clock throttling for a block of an ASIC may be performed in a manner that ensures complete synchronicity between the free-running root clock and the throttled clock within the block of the ASIC, thereby eliminating the need for asynchronous clock domains and, consequently, permitting the standard ASIC flow to be employed to assess and validate timing.

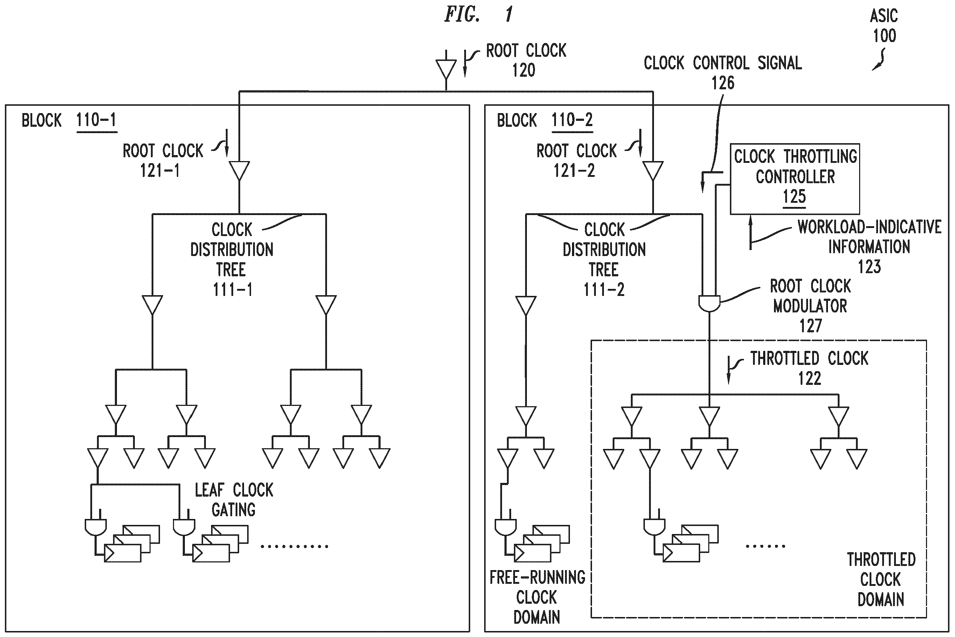

It will be appreciated that these example embodiments as well as various other example embodiments may be further understood by considering an ASIC including a block configured to support root clock throttling based on workload, as presented with respect to FIG. 1.

FIG. 1 depicts an example embodiment of an application specific integrated circuit including a set of blocks including a block configured to support root clock throttling as a function of a workload of the block.

In FIG. 1, an ASIC 100 includes two blocks 110-1 - 110-2 (collectively, blocks 110) configured to operate based on a root clock 120 which is provided to each of the blocks 110. The root clock 120 of the ASIC 100 which is provided to each of the blocks 110 is a free-running clock, which may be a system clock of the ASIC 100 or any other suitable source clock for the blocks 110 of the ASIC 100. The blocks 110 may be configured to support various logic functions. The blocks 110-1 - 110-2 include clock distribution trees 111-1 - 111-2 (collectively, clock distribution trees 111), respectively. The clock distribution trees 111 are configured to distribute clock signals to clocked component of the blocks 110 which are configured to support various logic functions supported by the blocks 110 (although, for purposes of clarity, only leaf clock components of the blocks 110 are illustrated). The entry of the root clock 120 of the ASIC 100 into the blocks 110-1 - 110-2 results in root clocks 121-1 - 121-2 (collectively, root clocks 121) for the blocks 110-1 - 110-2, which are distributed to clocked components of the blocks 110-1 - 110-2 via the clock distribution trees 111-1 - 111-2 of the blocks 110-1 - 110-2, respectively, thereby enabling the blocks 110-1 - 110-2 to operate based on the root clocks 121-1 - 121-2, respectively. It will be appreciated that the root clocks 121 of the blocks 110 are equivalent to the root clock 120 of the ASIC 100 and, thus, also are free-running clocks.

In FIG. 1, block 110-1 is not configured to support root clock throttling, whereas block 110-2 is configured to support root clock throttling. For block 110-1 which does not support root clock throttling, power savings may only be realized at the leaf components of the clock distribution tree 111-1 of the block 110-1 through leaf clock gating for the leaf components of the clock distribution tree 111-1 of the block 110-1. For block 110-2 which does support root clock throttling, power savings may be realized at various components at various levels of the clock distribution tree 111-2 of the block 110-2 through root clock throttling applied to the root clock 112-2 of the clock distribution tree 111-2 of the block 110-2.

In FIG. 1, as indicated above, the block 110-2 is configured to support root clock throttling. The block 110-2 is configured to support root clock throttling of the root clock 121-2 to form a throttled clock 122 for the block 110-2. The block 110-2 is configured to support root clock throttling of the root clock 121-2 to form the throttled clock 122 for the block 110-2 based on workload-indicative information 123 which is indicative of a workload on the block 110-2. The block 110-2 is configured to support root clock throttling based on a clock throttling controller 125 of the block 110-2 and based on a root clock modulator 127 of the block 110-2. In block 110-2, the clock throttling controller 125 is configured to generate a clock control signal 126 which is provided to the root clock modulator 127 for use by the root clock modulator 127 to throttle the root clock 121-2 to form the throttled clock 122 which is propagated by a portion of the clock distribution tree 111-2 of the block 110-2. As illustrated in FIG. 1, the throttling of the root clock 121-2 of the block 110-2 to form the throttled clock 122 for the block 110-2 results in propagation of the root clock 121-2 of the block 110-2 through a first portion of the clock distribution tree 111-2 of the block 110-2 (thereby resulting in a free-running clock domain portion of the block 110-2 including components served by the free-running root clock 121-2) and also results in propagation of the throttled clock 122 through a second portion of the clock distribution tree 111-2 of the block 110-2 (thereby resulting in a throttled clock domain portion of the block 110-2 including components served by the throttled clock 122).

The clock throttling controller 125 of the block 110-2 may control throttling of the root clock 121-2 of the block 110-2 to form the throttled clock 122 of the block 110-2 based on the workload of the block 110-2. The clock throttling controller 125 of the block 110-2 may control throttling of the root clock 121-2 of the block 110-2 to form the throttled clock 122 of the block 110-2 by throttling the root clock 121-2 of the block 110-2, as a function of the workload of the block 110-2, to form the throttled clock 122 of the block 110-2. The clock throttling controller 125 of the block 110-2 may control throttling of the root clock 121-2 of the block 110-2 to form the throttled clock 122 of the block 110-2 as a function of workload-indicative information 123 that is indicative of the workload of the block 110-2. The workload-indicative information 123 that is indicative of the workload of the block 110-2, as discussed further below, may include various type of information which may be obtained from various sources of information indicative of workload of the block 110-2, may be analyzed in various ways for controlling throttling of the root clock 121-2 of the block 110-2 to form the throttled clock 122 of the block 110-2 as a function of the workload of the block 110-2, or the like, as well as various combinations thereof.

The clock throttling controller 125, as indicated above, may control throttling of the root clock 121-2 of the block 110-2, to form the throttled clock 122 for the block 110-2, based on the workload-indicative information 123 that is indicative of the workload of the block 110-2. The workload-indicative information 123 that is indicative of the workload of the block 110-2 may be received from various sources of such information. The workload-indicative information 123 that is indicative of the workload of the block 110-2, as illustrated in FIG. 1, may be received from one or more elements located within and/or associated with the throttled clock domain, one or more elements located within and/or associated with the free-running clock domain, or the like, as well as various combinations thereof. The workload-indicative information 123 that is indicative of the workload of the block 110-2 may include various types of information which may be indicative of the workload on the block 110-2. For example, the workload-indicative information 123 may include information indicative of input activity on a set of input interfaces of the block 110-2 (e.g., queue occupancy of one or more queues of one or more input interfaces into the block 110-2), information indicative of pending work on core logic of the block 110-2 (e.g., queue occupancy of one or more queues of core logic of the block 110-2, an indication of a number of threads active for the core logic of the block 110-2, or the like), information indicative of output activity on a set of output interfaces of the block 110-2 (e.g., queue occupancy of one or more queues of one or more output interfaces out of the block 110-2), or the like, as well as various combinations thereof. It will be appreciated that the clock throttling controller 125 may determine the workload of the block 110-2 in various other ways.

The clock throttling controller 125, as indicated above, may control throttling of the root clock 121-2 of the block 110-2, to form the throttled clock 122 for the block 110-2, based on the workload-indicative information 123 that is indicative of the workload of the block 110-2. The clock throttling controller 125 may use the workload-indicative information 123 that is indicative of the workload of the block 110-2 in various ways for controlling throttling of the root clock 121-2 of the block 110-2, to form the throttled clock 122 for the block 110-2. For example, the clock throttling controller 125 of the block 110-2 may control throttling of the root clock 121-2 of the block 110-2 by receiving the workload-indicative information 123 that is indicative of the workload of the block 110-2 and generating the clock control signal 126 based on the workload-indicative information 123 indicative of the workload of the block 110-2. For example, the clock throttling controller 125 of the block 110-2 may control throttling of the root clock 121-2 of the block 110-2 by receiving the workload-indicative information 123 that is indicative of the workload on the block 110-2, computing a measure of the workload on the block 110-2 based on the workload-indicative information 123 indicative of the workload of the block 110-2, and generating the clock control signal 126 based on the measure of the workload of the block 110-2. In other words, the workload-indicative information 123 indicative of the workload of the block 110-2 may be used directly or indirectly (e.g., based on information which may be derived from processing and/or analysis of the workload-indicative information 123 indicative of the workload of the block 110-2) as the basis for generating the clock control signal 126 that is used to control throttling of the root clock 121-2 of the block 110-2 to form the throttled clock 122 for the block 110-2.

The clock throttling controller 125, as indicated above, may control throttling of the root clock 121-2 of the block 110-2, to form the throttled clock 122 for the block 110-2, based on the workload-indicative information 123 that is indicative of the workload of the block 110-2. It is noted that various aspects of controlling throttling of the root clock 121-2 of the block 110-2 to form the throttled clock 122 for the block 110-2 (e.g., capabilities used to determine the clock rate of the throttled clock 122, a granularity of clock rates supported for the throttled clock 122, or the like, as well as various combinations thereof) may be dependent on various aspects of the workload-indicative information 123 that is indicative of the workload of the block 110-2 (e.g., the types of information included in the workload-indicative information, the level of detail of the information included in the workload-indicative information, or the like, as well as various combinations thereof). For example, where the workload-indicative information 123 only includes an indication as to whether a queue fill level satisfies a threshold, one or more heuristics may be applied to determine an appropriate throttled clock rate for the throttled clock 122. For example, where the workload-indicative information 123 includes a queue fill level value that identifies the specific fill level of the queue, one or more mapping algorithms may be applied to map that specific fill level of the queue to a specific throttled clock rate for the throttled clock 122. It will be appreciated that various other capabilities may be applied to the workload-indicative information 123 and/or information derived from the workload-indicative information 123 to control the throttling of the root clock 121-2 of the block 110-2 to form the throttled clock 122 for the block 110-2 (e.g., at various levels of granularity of the throttled clock rate for the throttled clock 122, based on support for various throttled clock rate levels and/or transitions for the throttled clock 122, or the like, as well as various combinations thereof.

The clock throttling controller 125 of the block 110-2 may be configured to control generation of the throttled clock 122 from the root clock 121-2 by controlling passage of clock pulses of the root clock 121-2 of the block 110-2 to at least a portion of the clock distribution tree 111-2 of the block 110-2. For example, where the throttled clock for the block 110-2 is configured to support four rates (e.g., a full un-throttled clock rate, a 1/2 clock rate, a 1/4 clock rate, and a 1/8 clock rate), the throttling of the root clock 121-2 to provide the throttled clock 122 for the block 110-2 may include permitting all pulses of the root clock 121-2 to become clock pulses of the throttled clock 122 for the clock distribution tree 111-2 when the full un-throttled clock rate is used, permitting every other pulse of the root clock 121-2 to become clock pulses of the throttled clock 122 for the clock distribution tree 111-2 when the 1/2 clock rate is supported, permitting every fourth pulse of the root clock 121-2 to become clock pulses of the throttled clock 122 for the clock distribution tree 111-2 when the 1/4 clock rate is supported, and permitting every other eighth pulse of the root clock 121-2 into the clock distribution tree 111-2 when the 1/8 clock rate is supported. The control of the passage of clock pulses of the root clock 121-2 of the block 110-2 to at least a portion of the clock distribution tree 111-2 of the block 110-2 may be performed based on gating or using other suitable clock pulse control techniques. It will be appreciated that the throttled clock for the block 110-2 may be generated from the root clock 121-2 of the block 110-2 in various other ways (e.g., using various other throttled clock rate fractional levels based on fractions of clock pulses of the root clock 121-1 of the block 110-2 permitted to become clock pulses of the throttled clock 122 for the block 110-2, using various other clock pulse control techniques for controlling which clock pulses of the root clock 121-1 of the block 110-2 become clock pulses of the throttled clock 122 for the block 110-2, or the like, as well as various combinations thereof.

The clock throttling controller 125 of the block 110-2 may be configured to support a throttled clock 122 that has a throttled clock range. The clock throttling controller 125 of the block 110-2 may throttle the root clock 121-2 of the block 110-2 to provide the throttled clock 122 for the block 110-2 by modulating the root clock 121-2 of the block 110-2 within the throttled clock range. The throttled clock range of the throttled clock 122 of the block 110-2 may be defined based on the clock rate of the root clock 121-2 of the block 110-2. The throttled clock range of the throttled clock 122 of the block 110-2 may be defined between a non-zero minimum clock rate which is a fraction of the clock rate of the root clock 121-2 of the block 110-2 and a maximum clock rate which is equal to the clock rate of the root clock 121-2 of the block 110-2. The non-zero minimum clock rate ensures that the clock of the block 110-2 is always running at least at some minimum rate (e.g., for handling background traffic in a networking context or other types of work in other contexts). The maximum clock rate is equal to the clock rate of the root clock 121-2 of the block 110-2 without throttling, thereby enabling the clock of the block 110-2 to run un-throttled at the root clock rate of the root clock 121-2 of the block 110-2 when needed (i.e., the root clock 121-2 of the block 110-2 is free-running at the same clock rate as the free-running root clock 120).

The clock throttling controller 125 of the block 110-2 may be configured to support a throttled clock 122 that has a specific number of clock rate levels, specific clock rates for the clock rate levels, specific clock rate transitions between adjacent clock rate levels, and so forth. For example, the throttled clock 122 for the block 110-2 may support five clock rate levels which are defined by halving/doubling the clock rate between adjacent clock rate levels (e.g., a full un-throttled clock rate, a 1/2 clock rate, a 1/4 clock rate, a 1/8 clock rate, and a 1/16 clock rate as the minimum throttled clock rate). For example, the throttled clock 122 for the block 110-2 may support four clock rate levels which are defined by quartering/quadrupling the clock rate between adjacent clock rate levels (e.g., a full un-throttled clock rate, a 1/4 clock rate, a 1/16 clock rate, and 1/64 clock rate as the minimum throttled clock rate).

The clock throttling controller 125 of a block 110 may be configured to control transitions between clock rate levels of the throttled clock 122 based on a set of transition thresholds. For example, where the throttled clock 122 for a block 110-2 is configured to support four rates (e.g., a full un-throttled clock rate, a 1/2 clock rate, a 1/4 clock rate, a 1/8 clock rate), the throttling of the root clock 121-2 to provide the throttled clock 122 for the block 110-2 may be controlled based on three transition thresholds associated with the workload on the block 110-2. For example, the three transition thresholds may include LOW, MEDIUM, and HIGH thresholds where the 1/8 clock rate is used when the workload-indicative information 123 indicative of the workload on the block 110-2 is indicative that the workload on the block 110-2 is below the LOW threshold level, the 1/4 clock rate is used when the workload-indicative information 123 information indicative of the workload on the block 110-2 is indicative that the workload on the block 110-2 is between the LOW threshold level and the MEDIUM threshold level, the 1/2 clock rate is used when the workload-indicative information 123 information indicative of the workload on the block 110-2 is indicative that the workload on the block 110-2 is between the MEDIUM threshold level and the HIGH threshold level, and the full un-throttled clock rate (i.e., the root clock 121-2) is used when the workload-indicative information 123 information indicative of the workload on the block 110-2 is indicative that the workload on the block 110-2 is determined to be above the HIGH threshold level. It will be appreciated that other numbers of transition thresholds may be used where the throttled clock 122 supports other numbers of clock rate levels.

It will be appreciated that, although primarily presented with respect to supporting specific numbers of clock rate levels, specific clock rates for the clock rate levels, and specific clock rate transitions between adjacent clock rate levels, various other numbers of clock rate levels may be supported, various other clock rates for the clock rate levels may be supported, various other clock rate transitions between adjacent clock rate levels may be supported, or the like, as well as various combinations thereof (i.e., since the clock throttling controller 125 may individually control propagation of individual pulses of the root clock 121-2 of the block 110-2 to from the throttled clock 122 for the block 110-2, various combinations of pulses of the root clock 121-2 of the block 110-2 may be permitted to become part of the throttled clock 122 and/or prevented from becoming part of the throttled clock 122 in a manner that may support various clock rates, clock rate levels, clock rate transitions, clock rate transition thresholds, or the like, as well as various combinations thereof and/or in a manner that may obviate the need for specifically defining such clock rates, clock rate levels, clock rate transitions, clock rate transition thresholds, or the like, as well as various combinations thereof).

The clock throttling controller 125 of the block 110-2, although primarily described with respect to use of discrete transitions between defined clock rate levels based on defined clock transition thresholds, also or alternatively may be configured to support a more continuous control of the root clock 121-2, between the defined minimum clock rate and maximum clock rate of the clock rate range for the throttled clock 122, to provide the throttled clock 122 for the block 110-2. For example, the throttling of the root clock 121-2 of the block 110-2 to form the throttled clock 122 for the block 110-2 may be performed such that the clock rate of the throttled clock 122 is proportional to the workload of the block 110-2. For example, where the root clock 121-2 runs at a free-running rate of 32 clock pulses per second and the minimum clock rate of the throttled clock is defined as being 1/32 of the clock rate of the root clock 121-2, the clock throttling controller 125 may permit clock pulses of the root clock 121-2 into the throttled portion of the clock distribution tree 111-2 as the throttled clock 122 in proportion to the workload of the block 110-2 (e.g., permitting 8 clock pulses through based on a determination that the workload 123-2 of the block 110-2 is at 25% of a maximum possible workload of the block 110-2, permitting 10 clock pulses through based on a determination that the workload of the block 110-2 is at 30% of a maximum possible workload of the block 110-2, permitting 28 clock pulses through based on a determination that the workload of the block 110-2 is at 88% of a maximum possible workload of the block 110-2, and so forth).

The clock throttling controller 125 of a block 110-2, as indicated above, may be configured to control throttling of the root clock 121-2 of the block 110-2 to provide the throttled clock 122 for the block 110-2 in various ways. For example, the root clock throttling of the root clock 121-2 of the block 110-2 to provide the throttled clock 122 for the block 110-2 may be performed by increasing the clock rate of the throttled clock 122 based on a determination that the workload on the block 110-2 has increased (or increased above a threshold defined as a transition point between supported clock rates of the throttled clock 122) and decreasing the clock rate of the throttled clock 122 based on a determination that the workload on the block 110-2 has decreased (or decreased below a threshold defined as a transition point between supported clock rates of the throttled clock 122). In this manner, the throttled clock 122 for the block 110-2 may be maintained at the non-zero minimum clock rate of the throttled clock range while the workload on the block 110-2 remains low, and then increase, as the workload on the block 110-2 increases, until reaching the maximum un-throttled clock rate of the throttled clock range (i.e., at which point the throttled clock 122 of the block 110-2 is simply the free-running root clock 121-2 which runs within the block 110-2 without any throttling).

The clock throttling controller 125 of the block 110-2 may be configured to control passage of clock pulses of the root clock 121-2 of the block 110-2 to the throttled portion of the clock distribution tree 111-2 of the block 110-2 as the throttled clock 122 for the block 110-2 based on generation of the clock control signal 126 that is provided to the root clock modulator 127. The clock throttling controller 125 of the block 110-2 is configured to generate the clock control signal 126, based on the information indicative of the workload on the block 110-2, in a manner for controlling a fraction of pulses of the root clock 121-2 permitted to pass through the root clock modulator 127 to become pulses of the throttled clock 122 for the clock distribution tree 111-2 of the block 110-2. The root clock modulator 127, as illustrated in FIG. 1, may be an AND gate that is configured to accept the root clock 121-2 and the clock control signal 126 as inputs and output the throttled clock 122. In this case, while the clock control signal 126 is high then the pulses of the root clock 121-2 are permitted to pass through the AND gate to become pulses of the throttled clock 122 (thereby resulting in a throttled clock 122 that is equivalent to the free-running root clock 121-2 as long as the clock control signal 126 remains high), whereas while the clock control signal 126 is low then the pulses of the root clock 121-2 are effectively prevented from passing through the AND gate to become pulses of the throttled clock 122 (thereby resulting in a throttled clock 122 that is able to run at a clock rate lower than the full, un-throttled free-running clock rate of the root clock 121-2).

The clock throttling controller 125 of the block 110-2 and/or the root clock modulator 127 of the block 110-2 may be configured to ensure glitch-free output of the throttled clock 122 for the block 110-2. The clock throttling controller 125 of the block 110-2 and/or the root clock modulator 127 of the block 110-2 may be configured to ensure glitch-free output of the throttled clock 122 for the block 110-2 based on use of latching to ensure that the control signal 126 is latched when the root clock 121-2 is low (since the control signal 126 changes on the rising edge, which may result in a glitchy throttled clock 122 if the control signal 126 is fed directly into the root clock modulator 127). For example, where the root clock modulator 127 is an AND logic gate, the latching may be provided by a latch that is provided at one of the inputs to the AND logic gate, where the latch accepts the pulses of the root clock 121-2 and the clock control signal and outputs a signal which is provided to the one of the inputs to the AND logic gate as a control signal to ensure glitch-free output of the throttled clock 122 for the block 110-2. For example, the latching may be provided by the clock throttling controller 125 to ensure glitch-free output of the throttled clock 122 for the block 110-2.

It will be appreciated that, although primarily presented with respect to use of a specific type of logic gate as the root clock modulator 127 (namely, an AND logic gate), various other logic gates or combinations of logic gates (e.g., multiple AND gates, multiple NAND gates, or the like) may be used to provide the root clock modulator 127 that controls passage of pulses of the root clock 121-2 of the block 110-2 within the clock distribution tree 111-2 of the block 110-2 to become the throttled clock 122 for the block 110-2.

In FIG. 1, control over root clock throttling for the block 110-2 is implemented within the free-running clock domain of the block 110-2. For example, for control over root clock throttling for the block 110-2, the clock throttling controller 125 and the root clock modulator 127 are implemented within the free-running clock domain of the block 110-2. The root clock throttling control logic may be implemented within the free-running clock domain because the clock control signal 126 provided to the root clock modulator 127 needs to have the ability to turn on in any clock (e.g., in which case the root clock modulator 127 may be considered to be disposed between the free-running clock domain portion of the block 110-2 and the throttled clock domain portion of the block 110-2, such as where the input of the root clock modulator 127 that receives the root clock 121-2 is considered to form part of the free-running clock domain portion of the block 110-2 and the output of the root clock modulator 127 is considered to form part of the throttled clock domain portion of the block 110-2). It will be appreciated that, although primarily presented with respect to implementation of the root clock throttling control logic within the free-running clock domain of the block 110-2, at least a portion of the root clock throttling control logic may be implemented within the throttled clock domain of the block 110-2 (e.g., the root clock modulator 127, or a portion thereof, may be considered to be disposed within the throttled clock domain of the block 110-2).

It will be appreciated that the ASIC 100 may be implemented in various other ways for supporting root clock throttling for the ASIC 100.

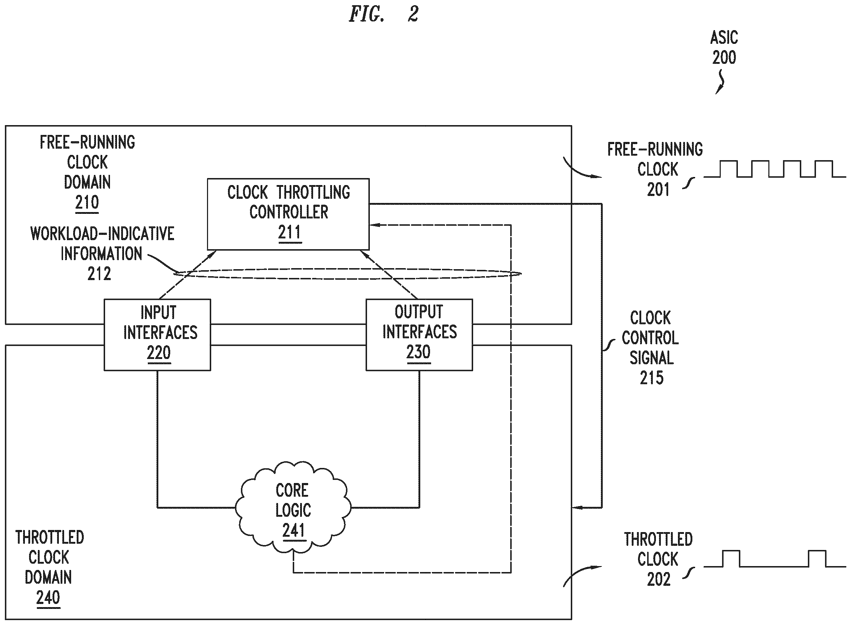

FIG. 2 depicts an example embodiment of root clock throttling for a block as a function of a workload of the block.

In FIG. 2, an ASIC 200 includes a free-running clock domain 210 and a throttled clock domain 240. The ASIC 200 includes a set of input interfaces 220 from the free-running clock domain 210 into the throttled clock domain 240 and a set of output interfaces 230 from the throttled clock domain 240 into the free-running clock domain 210. The ASIC 200 also includes core logic 241 within the throttled clock domain 240. The throttled clock domain 240 receives work input via the set of input interfaces 220 and provides work output via the set of output interfaces 230. It will be appreciated that, mapping the ASIC 200 of FIG. 2 to the ASIC 100 of FIG. 1, the free-running clock domain 210 may correspond to the free-running clock domain of the block 110-2 and the throttled clock domain 240 may correspond to the throttled clock domain of the block 110-2.

In FIG. 2, a root clock 201 is used within the free-running clock domain 210 and a throttled clock 202 is used within the throttled clock domain 240. The free-running clock domain 210 includes a clock throttling controller 211 (which may correspond to the clock throttling controller 125 of FIG. 1) which is configured to determine a workload of the throttled clock domain 240 and control throttling of the root clock 201 to form the throttled clock 202 that is applied to the throttled clock domain 240. This control is illustrated by the clock control signal 215 (which may correspond to the clock control signal 126 of FIG. 1) which is provided to the throttled clock domain 240 for controlling throttling of the root clock 201 to provide the throttled clock 202. It will be appreciated that the clock control signal 215 may be applied to one or more logic gates (omitted for purposes of clarity, and which may correspond to the root clock modulator 127 of FIG. 1) which may use the clock control signal 215 to control passage of clock pulses of the root clock 201 into the throttled clock domain 240 as the throttled clock 202. In this manner, the root clock 201 may be throttled, as a function of the workload of the throttled clock domain 240, to form the throttled clock 202.

As illustrated in FIG. 2 and discussed further below, the clock throttling controller 211 may obtain the workload-indicative information 212 indicative of the workload on the throttled clock domain 240, for use in generating the clock control signal 215 for the throttled clock domain 240, based on input from the set of input interfaces 220, input from the core logic 241 of the throttled clock domain 240, and input from the set of output interface 230. The types of inputs used by the clock throttling controller 211 to determine the workload-indicative information 212 and generate the clock control signal 215 for the throttled clock domain 240 may vary depending on the various factors, such as the application for which the ASIC is designed, the type of core logic 241 that is used, the manner in interfaces of the core logic 241 are implemented, or the like, as well as various combinations thereof. Some examples of combinations of input information which may be used by the clock throttling controller 211 to determine the workload-indicative information 212 indicative of the workload on the throttled clock domain 240, for use in generating the clock control signal 215 for the throttled clock domain 240, are described further below; however, it will be appreciated that various other types of workload-indicative information may be used as the basis for generating the clock control signal 215 for the throttled clock domain 240.

As an example, the clock throttling controller 211 may increase the clock rate of the throttled clock 202 in the throttled clock domain 240 based on detection of various conditions indicative of increases in workload on the throttled clock domain 240. For example, the clock throttling controller 211 may increase the clock rate of the throttled clock 202 in the throttled clock domain 240 (e.g., by permitting one or more additional clock pulses of the root clock 201 into the clock distribution tree of the throttled clock domain 240) based on a determination that an input request queue is not empty (such that the input work request is pulled into the block right away rather than waiting for a potentially large number of clock pulses where the clock rate of the throttled clock 202 is relatively low as compared to the clock rate of the root clock 201), based on a determination that command queue occupancy exceeds a configured threshold (where, here, it will be understood that the occupancy is indicative of the amount of pending work for the block), one cycle after any input is valid (which may be done for simplicity), and one cycle after any output is valid (which may be done for simplicity). It will be appreciated that various other information indicative of workload on the throttled clock domain 240 may be used as a basis for controlling throttling of the root clock 201 (up toward the maximum clock rate which is equal to the clock rate of the free-running root clock) to form the throttled clock 202 for the throttled clock domain 240.

As an example, the clock throttling controller 211 may decrease the clock rate of the throttled clock 202 in the throttled clock domain 240 based on detection of various conditions indicative of decreases in workload on the throttled clock domain 240. For example, the clock throttling controller 211 may decrease the clock rate of the throttled clock 202 in the throttled clock domain 240 (e.g., by preventing one or more additional clock pulses of the root clock 201 into the clock distribution tree of the throttled clock domain 240) based on a determination that an input request queue is empty (such that no input work request needs to be pulled into the block), based on a determination that command queue occupancy falls below a configured threshold (where, here, it will be understood that the occupancy is indicative of the amount of pending work for the block), a threshold number of cycles after any input is valid (which may be done for simplicity), and a threshold number of cycles after any output is valid (which may be done for simplicity). It will be appreciated that various other information indicative of workload on the throttled clock domain 240 may be used as a basis for controlling throttling of the root clock 201 (down toward a predefined non-zero minimum clock rate) to form the throttled clock 202 for the throttled clock domain 240.

In FIG. 2, communications between pseudo-synchronous clock domains may be supported in various ways, which may depend on whether communications are passing from the free-running clock domain (root clock) into the throttled clock domain (throttled clock) or passing from the throttled clock domain (throttled clock) into the free-running clock domain (root clock). For example, for communications passing from the free-running clock domain 210 into the throttled clock domain 240 (i.e., fast 4 slow), the communications based on different clock rates may be supported based on one or more of using a pseudo-synchronous FIFO queue, using a pulse crosser configured to pass pulses across (e.g., the number of input cycles held in the normal clock domain will generate the same number of output cycles held high in the throttled clock domain), using the signal from the free-running clock domain directly in the throttled clock domain if the signal itself is semi-static or there is no issue with missing activities in between clocks (e.g., counter), or the like, as well as various combinations thereof. For example, for communications passing from the throttled clock domain 240 into the free-running clock domain 210 (i.e., slow 4 fast), the communications based on different clock rates may be supported based on one or more of using one or more of a pseudo-synchronous FIFO queue, using a pulse-transition-pulse (PTP) module to transfer signals across to the normal domain (e.g., for certain types of signals that pulse per cycle), or the like, as well as various combinations thereof. It will be appreciated that inter-domain communications may be supported in various other ways.

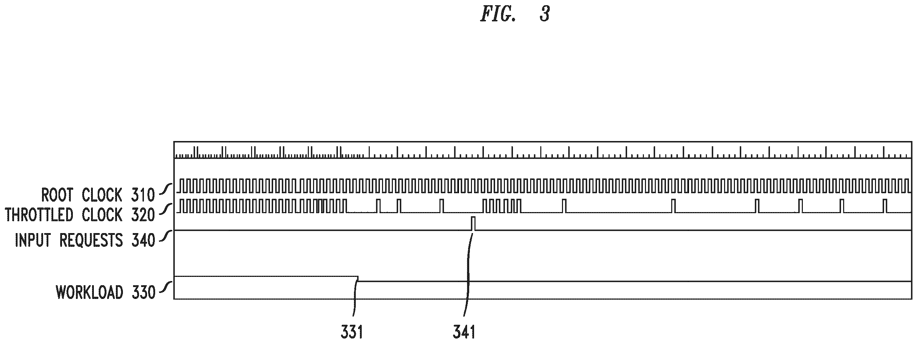

FIG. 3 depicts an example embodiment of a root clock throttling technique, based on gating of the root clock to form a throttled clock, in a manner that preserves synchronization of the timing of the root clock with the timing of the throttled clock. As illustrated in FIG. 3, a root clock 310 is throttled to form a throttled clock 320 as a function of a workload that is based on pending work 330 and input requests 340. In FIG. 3, to the left of the pending work transition point 331, the pending work is relatively high so the root clock 310 is permitted to run un-throttled (i.e., all of the pulses of the root clock 310 are permitted to pass such that the throttled clock 320 is equivalent to the root clock 310). In FIG. 3, to the right of the pending work transition point 331, the pending work 330 drops so the root clock 310 is throttled such that the throttled clock 320 runs at a lower clock rate (i.e., a fraction of the pulses of the root clock 310 are permitted to pass such that the throttled clock 320 has less pulses than the root clock 310). In FIG. 3, while the throttled clock 320 is primarily run at a reduced rate after the pending work 330 drops at the pending work transition point 331, an input request 341 is received during this time, which temporarily causes the clock rate of the throttled clock 320 to be increased (as indicated by the clock pulses 342) before being reduced again based on the pending work 330. This illustrates the manner in which indicators of workload may be used to reduce the clock rate of the block and, thus, achieve significant power savings within the clock distribution tree of the block.

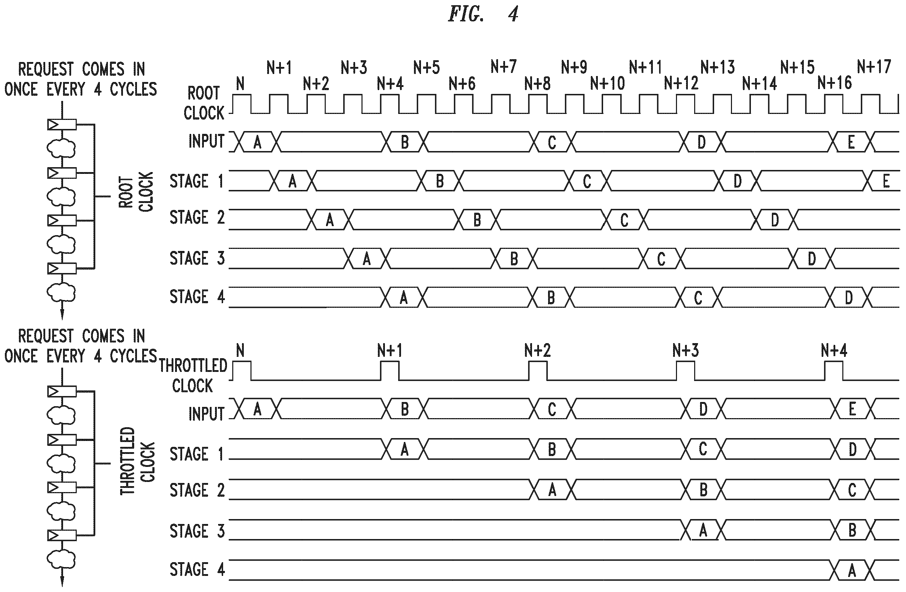

FIG. 4 depicts an example embodiment of a root clock throttling technique, based on gating of the root clock to form a throttled clock, in a manner that enables more useful work to be performed by the block based on the throttled clock. As illustrated in FIG. 4, throttling of the root clock to provide a throttled clock enables more useful work to be done per clock cycle. This may be seen based on a comparison of transitioning of work along the pipeline in a normal clock domain that uses the root clock (as depicted at the top of FIG. 4) and transitioning of the work along the pipeline in a throttled clock domain that uses a throttled clock operating at one fourth of the clock rate of the root clock (as depicted at the bottom of FIG. 4). In both cases, input work requests come in once every four clock cycles of the normal clock (with the work requests being denoted as A, B, C, D, and E). As illustrated at the top of FIG. 4, only one of the four stages illustrated to the left of FIG. 4 is doing work per clock pulse of the root clock (indicated by the letters "A" through "E" below the clock pulses, with only one letter being below each clock pulse). As illustrated at the bottom of FIG. 4, for each of clock pulses N+2, N+3, and N+4, multiple stages, of the four stages illustrated to the left of FIG. 4, are doing work for per clock pulse of the throttled clock. For example, the first and second stages are doing work based on the work requests B and A, respectively, for the clock pulse N+2. Similarly, for example, the first, second, and third stages are doing work based on the work requests C, B, and A, respectively, for the clock pulse N+3. Similarly, for example, the first, second, third, and fourth stages are doing work based on the work requests D, C, B, and A, respectively, for the clock pulse N+4. In FIG.4, the power savings between the normal clock domain and the throttled clock domain is indicated by the number of instances of the letters denoting the work requests illustrated in FIG. 4.

It will be appreciated that various example embodiments presented herein, although primarily presented with respect to supporting power optimizations for a particular type of electronic circuit (namely, within ASICs), may be applied for supporting power optimizations for other types of electronic circuits and, thus, may be described more generally within the context of support for power optimizations for blocks of electronic circuits in general.

Various example embodiments may be configured to provide an apparatus including a block, wherein the block includes a set of elements configured to operate based on a clock signal applied to the block, wherein the block includes a clock distribution tree configured to distribute clock pulses of the clock signal to the set of elements of the block, wherein the block is configured to control which of the clock pulses of the clock signal are permitted to pass from a first portion of the clock distribution tree of the block into a second portion of the clock distribution tree of the block. The first portion of the clock distribution tree of the block may serve a first portion of the elements and the second portion of the clock distribution tree of the block may serve a second portion of the elements including leaf elements of the block. The block may be configured to control which of the clock pulses of the clock signal are permitted to pass from the first portion of the clock distribution tree of the block into the second portion of the clock distribution tree of the block based on information indicative of a workload on the block. The block may include a controller configured to obtain the information indicative of the workload on the block and generate, based on the information indicative of the workload on the block, a clock control signal configured to control which of the clock pulses of the clock signal of the block are permitted to pass from the first portion of the clock distribution tree of the block into the second portion of the clock distribution tree of the block. Here, the apparatus may be an electronic circuit on which the block is disposed (e.g., an IC, an ASIC, or the like), a device including an electronic circuit on which the block is disposed, or the like.

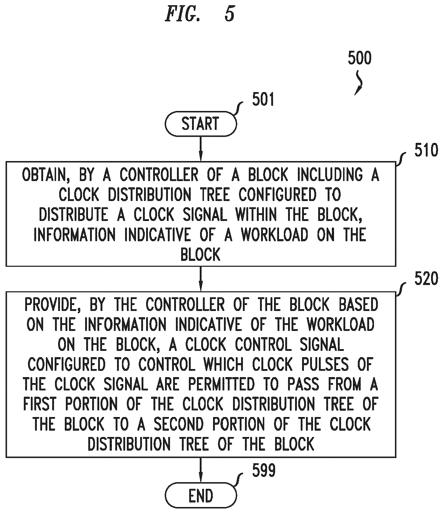

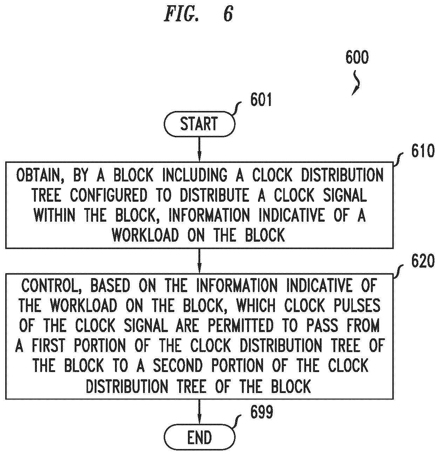

It will be appreciated that these example embodiments for supporting power optimizations for blocks of electronic circuits in general may be further understood by way of reference to FIG. 5 and FIG. 6.

FIG. 5 depicts an example embodiment of a method for use by a controller of a block of an electronic circuit to support root clock throttling. It will be appreciated that, although primarily presented as being performed serially, at least a portion of the functions of the method 500 may be performed contemporaneously or in a different order than as presented with respect to FIG. 5. At block 501, the method 500 begins. At block 510, obtain, by a controller of a block including a clock distribution tree configured to distribute a clock signal within the block, information indicative of a workload on the block. At block 520, provide, by the controller of the block based on the information indicative of the workload on the block, a clock control signal configured to control which clock pulses of the clock signal are permitted to pass from a first portion of the clock distribution tree of the block to a second portion of the clock distribution tree of the block. At block 599, the method 500 ends. It will be appreciated that various functions presented herein with respect to FIGs. 1-4 may be incorporated within the context of method 500 of FIG. 5.

FIG. 6 depicts an example embodiment of a method for use by a block of an electronic circuit to support root clock throttling. It will be appreciated that, although primarily presented as being performed serially, at least a portion of the functions of the method 600 may be performed contemporaneously or in a different order than as presented with respect to FIG. 6. At block 601, the method 600 begins. At block 610, obtain, by a block including a clock distribution tree configured to distribute a clock signal within the block, information indicative of a workload on the block. At block 620, control, based on the information indicative of the workload on the block, which clock pulses of the clock signal are permitted to pass from a first portion of the clock distribution tree of the block to a second portion of the clock distribution tree of the block. At block 699, the method 600 ends. It will be appreciated that various functions presented herein with respect to FIGs. 1-4 may be incorporated within the context of method 600 of FIG. 6.

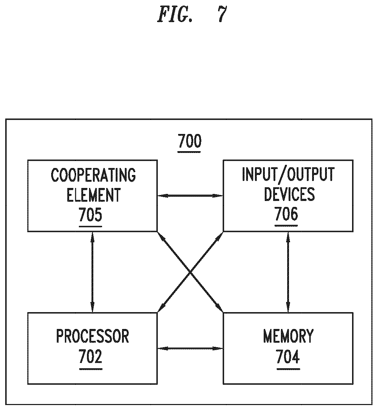

FIG. 7 depicts an example embodiment of a computer suitable for use in performing various functions presented herein.

The computer 700 includes a processor 702 (e.g., a central processing unit (CPU), a processor, a processor having a set of processor cores, a processor core of a processor, or the like) and a memory 704 (e.g., a random access memory (RAM), a read-only memory (ROM), or the like). In at least some example embodiments, the computer 700 may include at least one processor and at least one memory storing instructions that, when executed by the at least one processor, cause the computer to perform various functions presented herein.

The computer 700 also may include a cooperating element 705. The cooperating element 705 may be a hardware device. The cooperating element 705 may be a process that can be loaded into the memory 704 and executed by the processor 702 to implement various functions presented herein (in which case, for example, the cooperating element 705 (including associated data structures) can be stored on a non-transitory computer readable medium, such as a storage device or other suitable type of storage element (e.g., a magnetic drive, an optical drive, or the like)).

The computer 700 also may include one or more input/output devices 706. The input/output devices 706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 700 may represent a general architecture and functionality suitable for implementing functional elements described herein, portions of functional elements described herein, or the like, as well as various combinations thereof. For example, the computer 700 may provide a general architecture and functionality that is suitable for implementing one or more elements presented herein. For example, the computer 700 may provide a general architecture and functionality that is suitable for implementing at least one of a computer configured to support design of an electronic circuit or a portion thereof, a computer configured to utilize an electronic circuit or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a block, wherein the block includes a clock distribution tree configured to distribute a clock signal within the block, wherein the block is configured to control, based on information indicative of a workload on the block, which clock pulses of the clock signal are permitted to pass from a first portion of the clock distribution tree of the block to a second portion of the clock distribution tree of the block.

2. The apparatus according to claim 1, wherein a fraction of the clock pulses of the of the clock signal that are permitted to pass from the first portion of the clock distribution tree of the block to the second portion of the clock distribution tree of the block is controlled to remain within a range between a non-zero minimum and a maximum that is based on the clock signal of the block.

3. The apparatus according to any of claims 1 to 2, wherein clock pulses of the clock signal of the block are permitted to pass from the first portion of the clock distribution tree of the block to the second portion of the clock distribution tree of the block when the information indicative of the workload on the block is indicative that activity is presented at an input interface to the block.

4. The apparatus according to any of claims 1 to 3, wherein clock pulses of the clock signal of the block are prevented from passing from the first portion of the clock distribution tree of the block to the second portion of the clock distribution tree of the block when the information indicative of the workload on the block is indicative that no activity is presented at an input interface to the block.

5. The apparatus according to any of claims 1 to 4, wherein clock pulses of the clock signal of the block are permitted to pass from the first portion of the clock distribution tree of the block to the second portion of the clock distribution tree of the block when the information indicative of the workload on the block is indicative that activity is available at an output interface from the block.

6. The apparatus according to any of claims 1 to 5, wherein clock pulses of the clock signal of the block are prevented from passing from the first portion of the clock distribution tree of the block to the second portion of the clock distribution tree of the block when the information indicative of the workload on the block is indicative that no activity is available at an output interface from the block.

7. The apparatus according to any of claims 1 to 6, wherein clock pulses of the clock signal of the block are permitted to pass from the first portion of the clock distribution tree of the block to the second portion of the clock distribution tree of the block when the information indicative of the workload on the block is indicative that a measure of internal states of the block is indicative that work is presented to the block.

8. The apparatus according to claim 7, wherein an amount of the clock pulses of the clock signal of the block that are permitted to pass from the first portion of the clock distribution tree of the block to the second portion of the clock distribution tree of the block is based on the measure of the internal states of the block.

9. The apparatus according to any of claims 1 to 8, wherein the clock pulses of the clock signal of the block that are permitted to pass from the first portion of the clock distribution tree of the block to the second portion of the clock distribution tree of the block are synchronous to the clock signal of the block at a leaf level of the clock distribution tree of the block.

10. The apparatus according to any of claims 1 to 9, wherein the block includes:
a controller configured to generate, based on the information indicative of the workload on the block, a clock control signal configured to control which clock pulses of the clock signal are permitted to pass from the first portion of the clock distribution tree of the block to the second portion of the clock distribution tree of the block; and
a clock modulator configured to control, based on the clock control signal, passage of clock pulses of the clock signal of the block from the first portion of the clock distribution tree of the block to the second portion of the clock distribution tree of the block.

11. The apparatus according to any of claims 1 to 10, wherein the block includes:
a controller configured to generate, based on the information indicative of the workload on the block, a clock control signal configured to control which clock pulses of the clock signal are permitted to pass from the first portion of the clock distribution tree of the block to the second portion of the clock distribution tree of the block; and
a clock modulator including a clock input configured to receive the clock signal of the block, a control input configured to receive a latched version of the clock control signal, and a clock output configured to output the clock pulses of the clock signal of the block that are permitted to pass from the first portion of the clock distribution tree of the block to the second portion of the clock distribution tree of the block.

12. The apparatus according to any of claims 1 to 11, wherein the block includes an interface configured to support communications between the first portion of the clock distribution tree of the block and the second portion of the clock distribution tree of the block.

13. The apparatus according to claim 12, wherein the interface comprises one of a pseudo-synchronous first-in-first-out queue, a pulse crosser, or a pulse-transition-pulse module.

14. The apparatus according to any of claims 1 to 13, wherein the apparatus comprises one of a device including an electronic circuit on which the block is disposed, an electronic circuit on which the block is disposed, an integrated circuit on which the block is disposed, or an application specific integrated circuit on which the block is disposed.

15. A method, comprising:
obtaining, by a block including a clock distribution tree configured to distribute a clock signal within the block, information indicative of a workload on the block; and
controlling, based on the information indicative of the workload on the block, which clock pulses of the clock signal are permitted to pass from a first portion of the clock distribution tree of the block to a second portion of the clock distribution tree of the block.
